# EUROPEAN PATENT SPECIFICATION

(11) **EP 2 075 389 B1**
(45) Date of publication and mention of the grant of the patent: **01.02.2012**
(21) Application number: 08020296.3
(22) Date of filing: 21.11.2008
(51) Int. Cl.: E04D 1/18, E04D 1/30, E04D 13/17, H01L 31/048

(54) **Roof section comprising solar thermal slates**
Dachbereich mit solarthermischen Schiefertafeln
Partie de toit comportant des ardoises solaires thermiques

(30) Priority: 30.11.2007 IE 20070869; 02.10.2008 IE 20080797
(43) Date of publication of application: 01.07.2009
(73) Proprietor: Barnes, Matthew, Dublin 16 (IE)
(72) Inventor: Barnes, Matthew, Dublin 16 (IE)
(74) Representative: Kelly, Madeleine

(56) References cited:
- WO-A-2008/103575
- CA-A1- 2 199 340
- DE-A1- 2 850 844
- DE-U1- 29 521 509
- US-A1- 2003 154 666
- US-A1- 2007 193 618
- US-B1- 6 463 708

## Description

The present invention relates to a system for harnessing solar power and in particular a thermal roof slate arranged to harness solar power.

Solarwall™, www.solarwall.com, is a metal wall system for harnessing solar power to heat and ventilate indoor spaces. Typically, in a Northern hemisphere building, metal perforated collector panels are installed several inches from a south facing wall, to create an air cavity there between. The panels are heated by solar radiation, and ventilation fans located at the top of the wall create negative pressure in the air cavity, drawing in the solar heated air through the panel perforations. A connection to a heating, ventilation and air conditioning system, HVAC, intake allows air to be preheated before entering the an handler, reducing the load on a conventional heater. This heated fresh air is then distributed into the building through the existing HVAC system or through separate fans and perforated ducting.

Solaroptions, www.solaroptions.com, provide photovoltaic roof slates for converting sun light directly into electricity. A plurality of such slates is interconnected to produce a solar cell.

US 6 463 708 B1 discloses a roof section according to the preamble of claim 1 and 2.

DE 28 50 844 discloses a roof section comprising a plurality of overlapping roof slates arranged to be laid on a roof structure wherein at least some of said roof slates comprise a major surface and a reverse surface, and in use air is capable of being drawn from a lower edge of the roof section through a channel formed underneath slates towards an upper portion of the roof section, for collection.

The object of the present invention is therefore to provide an improved system for harnessing solar power.

According to a first aspect of the present invention, there is provided a roof section according to the characterising portion of claim 1.

Preferably, said mesh comprises an expanded raised mesh.

According to a second aspect of the present invention, there is provided a roof section according to the characterising portion of claim 2.

Preferably, the slate is composed of aluminium slate.

Preferably, the slate includes a photovoltaic element disposed on a portion of said major surface not covered by another slate in use and means for interconnecting said element with an element of another slate.

Alternatively, the slate is composed of a transparent substrate having a photovoltaic element disposed on an underside of the substrate and a backing sheet disposed on an underside of the element.

Preferably, said backing layer is darkly coloured.

Preferably said photovoltaic element comprises one or more photovoltaic cells or a thin film photovoltaic layer.

Preferably said means for interconnecting said cell comprises an electrical connector disposed on said reverse side of said slate and electrically connected to said photovoltaic element.

Embodiments of the invention will now be described, by way of example, with reference to the accompanying drawings, in which:
Fig. 1a is an elevation view of a major surface of a roof slate used in a roof section according to a first embodiment of the present invention;
Fig. 1b is a reverse view of the roof slate of Fig. 1a;
Fig. 2 illustrates a section of a roof comprising the slates of Fig. 1a and Fig 1b;
Fig. 3 illustrates a side view of a ridge of the roof of Fig. 2;
Fig. 4 illustrates a front view of the roof of Fig. 3;
Fig. 5a is an elevation view of a major surface of a roof slate used in a roof section according to a second embodiment of the present invention;
Fig. 5b is a reverse view of the roof slate of Fig. 5a;
Fig. 6a is an elevation view of a major surface of a roof slate used in a roof section according to a third embodiment of the present invention;
Fig. 6b is a reverse view of the roof slate of Fig. 6a;
Fig. 7a is an elevation view of a major surface of a roof slate used in a roof section according to a fourth embodiment of the present invention;
Fig. 7b is a reverse view of the roof slate of Fig. 7a;
Fig. 8 is an elevation view of a section of the roof slates of Fig. 6a and Fig. 7a; and
Fig. 9 is a front view of the slates of Fig.'s 6a and 6b, and Fig.'s 7a and 7b, arranged in an overlapping manner for fixing to a roof; and
Fig. 10 is a perspective view of a portion of a roof including some tiles of the type shown in Fig. 7a and 7b.

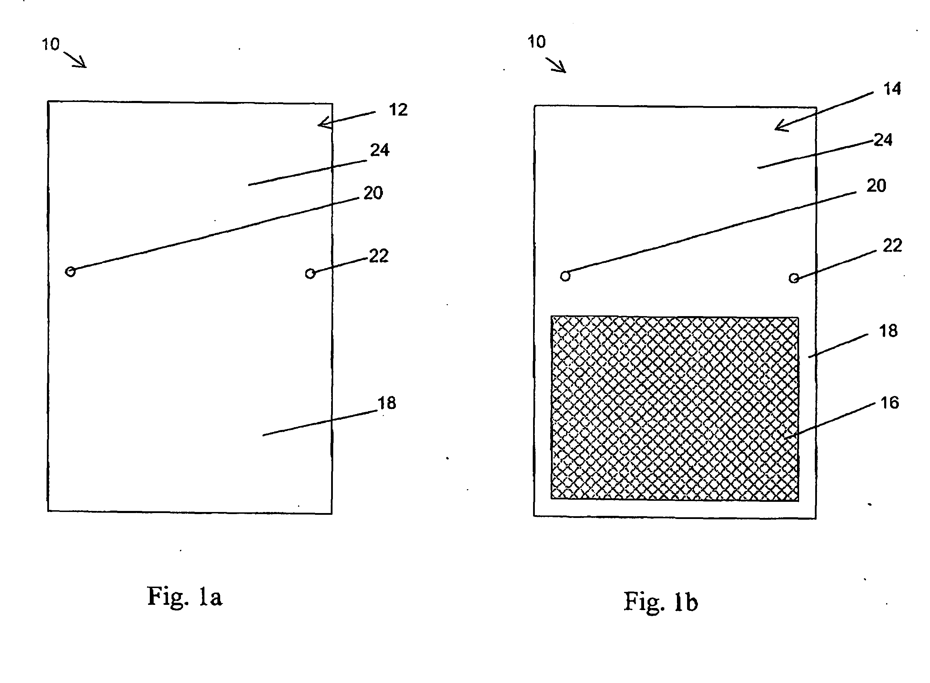

Referring to Fig. 1a and Fig. 1b, there is provided a roof slate 10 of a substantially rectangular form comprising a major surface 12 and a reverse surface 14.

The slate 10 comprises first and second fixation points, 20 and 22 respectively, for fixing the slate 10 to a batten of a roof. In this embodiment, the fixation points are a pair of approximately 4mm spaced apart holes extending through the slate. As illustrated in Figs. 1a and 1b, the fixation holes are preferably provided in an end portion 24 of the slate that will be covered by another slate when placed on a roof.

Fig. 1b depicts the reverse surface 14 of the slate of Fig. 1a. In this embodiment, a spacer comprising a generally square portion of wire mesh 16 is provided on this reverse surface 14 at an end portion 18 of the slate 10 which covers another slate when placed on a roof. Preferably, the wire mesh is of the expanded raised type providing a spacing of approximately 3mm between the major and reverse surfaces of overlying slates. This allows air to pass along the plane of the mesh across the reverse surface of the slate.

In this embodiment, the slate 10 is formed of stainless iron and the mesh 16 is composed of stainless steel or aluminium with the mesh being spot welded at each corner to the reverse surface 14 of the slate 10.

It will be appreciated that the slate 10 may be formed of any suitable material and may comprise any suitable type or number of fixation points, for example, slates may be arranged to clip together or to a roof. Similarly, the mesh 16 may be fixed in any suitable way to the slate.

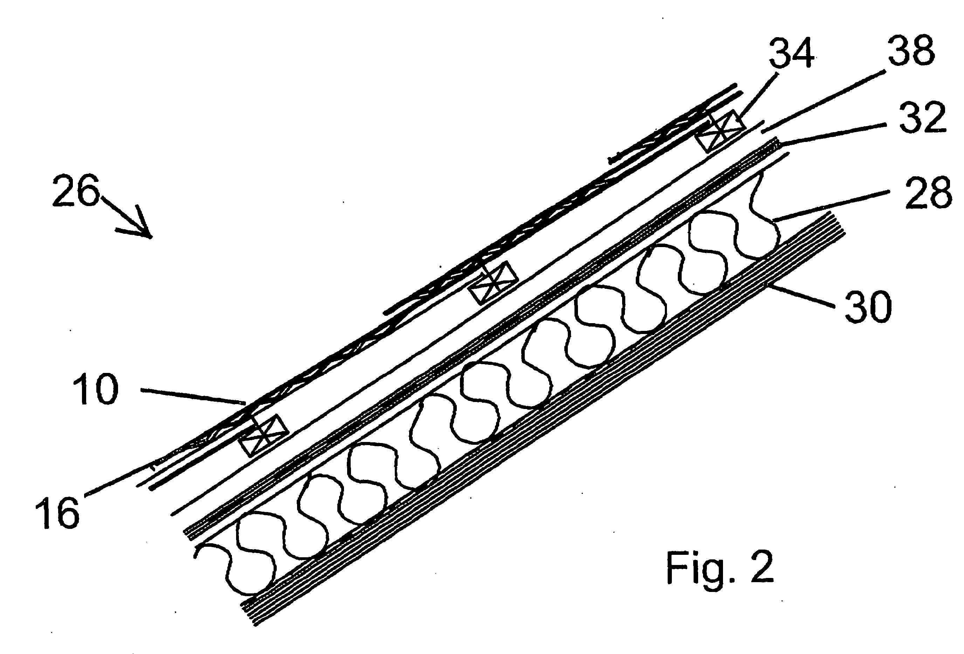

As mentioned, a plurality of slates 10 are arranged to be fixed to battens of a roof in a conventional overlapping manner, such that the first end portion 18 of the reverse surface 14 of a first slate overlies the other end portion 24 of the obverse surface 12 of a subsequent slate 10. Because of the spacing provided by the mesh, air is capable of circulating underneath the laid slates through the mesh 16, as will be described in more detail below with reference to Fig. 2.

Fig. 2 illustrates a section of a roof 26 of a house. The roof 26 comprises a plurality of parallel spaced apart rafters (not shown) between which an insulation layer 28 is provided. In particular where the roof encloses living accommodation, a plasterboard layer 30 is fixed to the rafters and plastered to provide a ceiling for the room. A membrane or underlay 32 is laid over the rafters and a plurality of spaced apart battens 34 are provided and run parallel to a ridge (not shown) of the roof 26.

In this embodiment, before laying the battens 34, a plurality of counter battens 38 are provided between the battens 34 and the membrane 32. The counter battens are fixed to the rafters in a mutually spaced apart manner and run perpendicular to the ridge of the roof 26. In this way, a plurality of channels (not shown) running perpendicular to the ridge is formed between the spaced apart counter battens 38.

The slates 10 of the first embodiment are then fixed to the battens 34 of the roof in an overlapping manner as described above.

In use, the slates 10 are heated by solar radiation causing warming of the air under the slate. The resultant convection causes fresh air to be drawn in through the mesh portion of the slates with the warm air rising along the channels created by the batten 34 and counter batten 38 arrangement towards the ridge of the roof 26.

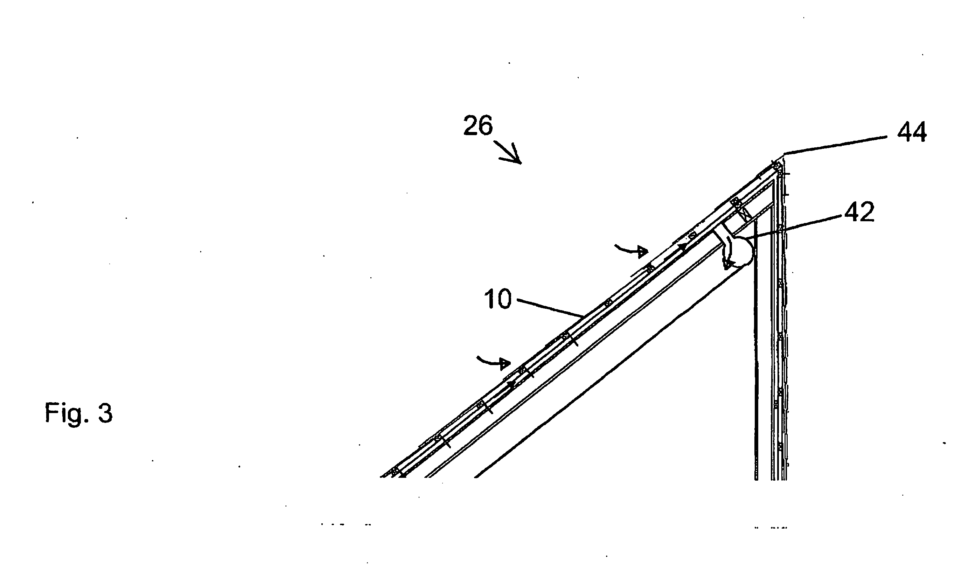

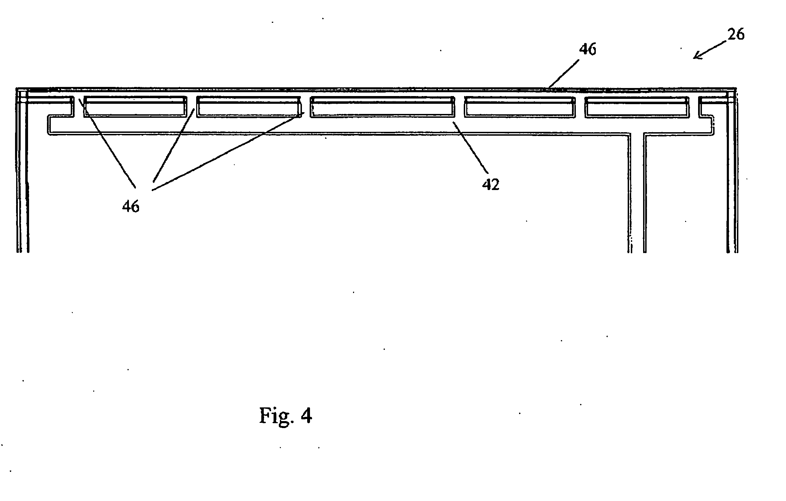

A duct 42, as illustrated in Fig. 3 and Fig. 4, runs along the roof 26 substantially parallel and in close proximity to the ridge 44 of the roof 26. The duct 42 is in fluid communication with the plurality of channels conveying the warm air towards the ridge 44 of the roof 26. In this embodiment, fluid communication between the duct 42 and channels is effected through a plurality of inlets 46 provided in the duct 42 and passing from within the roof space into the channels of warm air running under the roof slates.

A fan (not shown) located within the roofed building is employed to collect the warm air from the duct 42 for manipulation of the solar energy harnessed. For example, the warm air may be circulated throughout the building, provided to an input of a heat pump for generating warmer air or used to heat water.

Any conventional measures for increasing the amount of solar radiation to which the roof 26 is subjected may be employed. For example, a plurality of white quartz reflective pebbles (not shown) on a sand or cement base may be arranged around the roofed building in order to increase the amount of solar radiation to which the slates 10 are subjected.

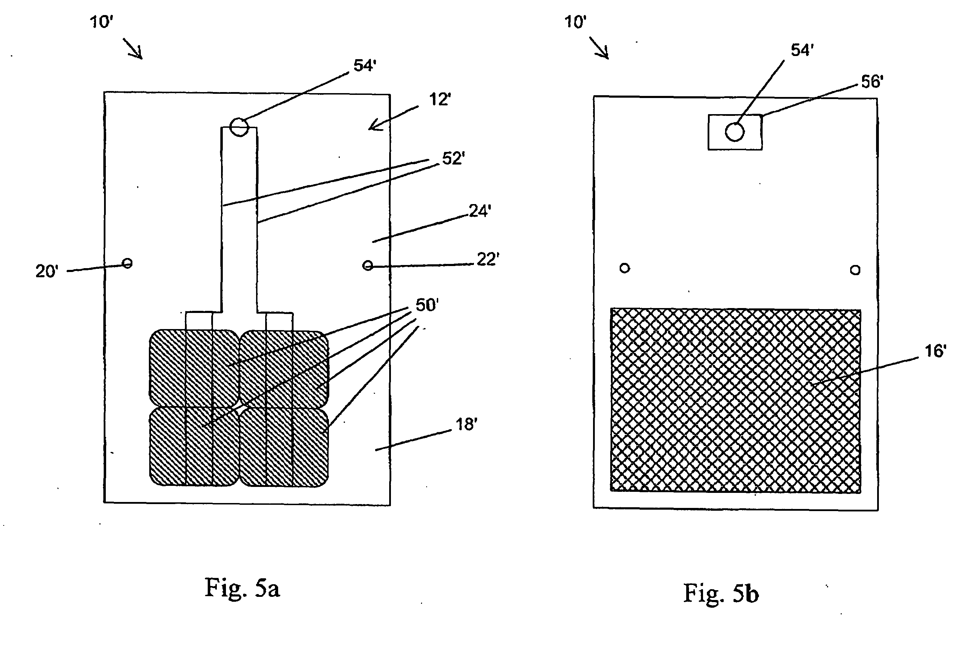

Fig. 5a and Fig 5b illustrate a slate 10' used in a roof section of a second embodiment of the present invention, which corresponds closely to the roof slate 10 of the first embodiment. However, the slate 10' of the second embodiment further comprises a plurality of thin photovoltaic cells 50' laminated to a first end portion 18' of an obverse surface 12' of the slate 10', as illustrated in Fig. 5a.

In this embodiment, cell connections 52' are fed from the obverse surface through a hole 54' provided in a second portion 24' of the slate 10' to a junction box 56' provided on a reverse surface 14' of the slate 10'.

As the slates 10' are laid, the junction boxes 56' of each slate 10' are interconnected such that, in use, the solar energy converted into electricity by the photovoltaic cells can be fed to a battery (not shown) for storage.

In the embodiments illustrated above, the slates are shown as generally rectangular, however, it can be seen that they can have any suitable shape, for example, the corners of the exposed end portions 18, 18' can be mitred.

It will be appreciated that the slate 10, 10', may also be formed of aluminium, steel, stainless steel or any other suitable material. Furthermore, the slate 10,10' is preferably painted for protection with a heat resistant material compatible with the disposal of photovoltaic materials thereon. Alternatively, the slate 10, 10' may be painted for protection with a polyester powder coated paint compatible with the disposal of photovoltaic materials thereon. The polyester powder coating can be varied in colour to coordinate with black, grey, green or brown in accordance with RAL or BS colour charts, with a loss of efficiency in the order of 2 to 6%.

In relation to thermal output, a south facing roof with a 30° pitch in Ireland is estimated to receive approximately an average of 1 000k Wh/m²/yr of solar energy.

It is estimated that the thermal efficiency of roof constructed with the slates of the first and second embodiments would be in the region of between 30% and 70%.

The photovoltaic layer or cells of the slate of the second embodiment exhibits an average efficiency of PV covered area in the range of approximately 7% to 14%, with the PV covered area ranging from 65% to 100% of the exposed area of the slate. The combined efficiency of the PV and the heated air shall typically be in the region of 37% to 79%.

Battery storage and inverter efficiency would be between 75%- and 90% and so this gives a combined efficiency for a roof constructed of slates of the second embodiment of between 34% and 72.6%.

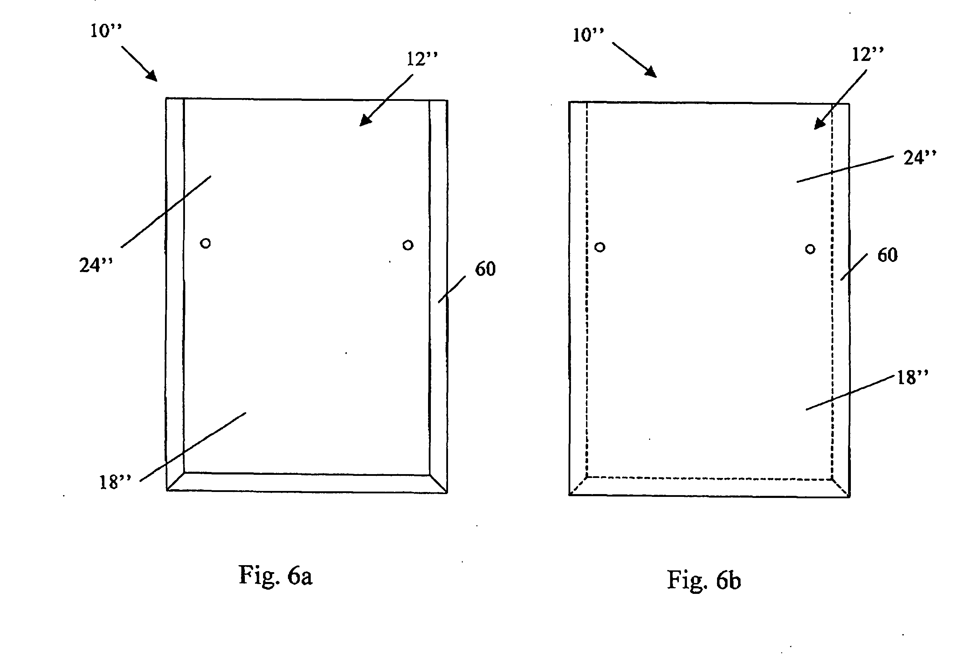

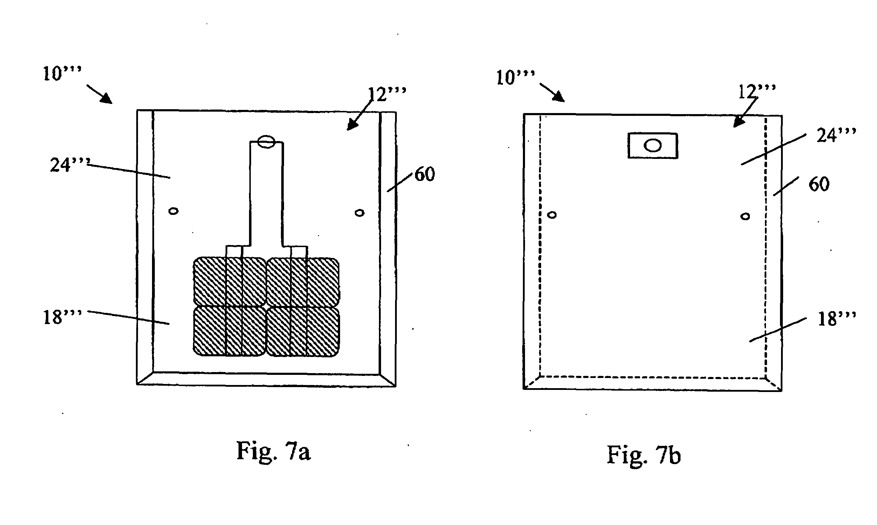

Referring to Fig. 6a and 6b, and Fig. 7a and 7b, there is provided roof slates 10" and 10'' of a substantially rectangular form corresponding closely with roof slates 10 and 10', of Fig.'s 1a and 1b, and Fig.'s 5a and 5b, respectively.

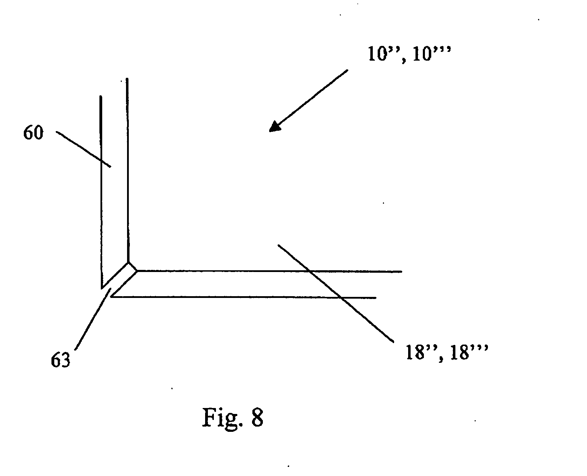

In one embodiment, however, slates 10" and 10"' do not comprise a spacer in the form of a wire mesh. Instead, slates 10" and 10"', comprise a skirt, 60 formed around a periphery of said slate 10" and 10"' in order to provide a spacing 62 between overlying slates. In a further variation of the embodiments of Figures 6 and 7 and as illustrated in Fig. 8, there is preferably an additional gap 63 provided at the mitre of the slate 10",10"' such that in use the amount of air capable of circulating underneath laid slates is increased.

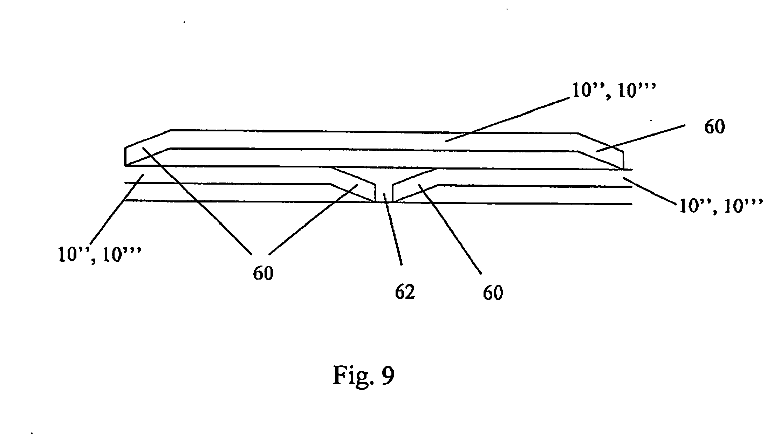

Referring to Fig. 9, there is depicted a plurality of slates 10" or 10"' when fixed to a roof. The slates 10",10"', are arranged to be fixed to battens of a roof in a conventional overlapping manner, such that the first end portion 18", 18"', of the reverse surface 14", 14"', of a first slate overlies the other end portion 24", 24"', of the obverse surface 12", 12"', of a subsequent slate 10", 10"'. Due to the substantially triangular spacing 62 provided between substantially abutting skirts 60 of adjacent slates, 10",10"', air is capable of circulating underneath the laid slates through the spacing 62, and is conveyed to the channels for collection as described in more detail with reference to Fig. 2.
In the embodiments illustrated in Fig's 6a and 6b, and Fig.'s 7a and 7b, the slates 10", 10"' are composed of aluminium slate and may be either cast or pressed.

In an alternative implementation of the embodiments Fig.'s 5a and 5b, and Fig.'s 7a and 7b, instead of forming the photovoltaic cells on the upper surface of the slate, the slate could comprise a transparent substrate comprising a thermo-mechanical stable material.. In this case, the photovoltaic cells are glued or laminated to the underside of the substrate and then a darkly coloured backing sheet, for example, composed of Tedlar ® is applied to the underside of the cells to improve the thermal attractiveness of the slate.

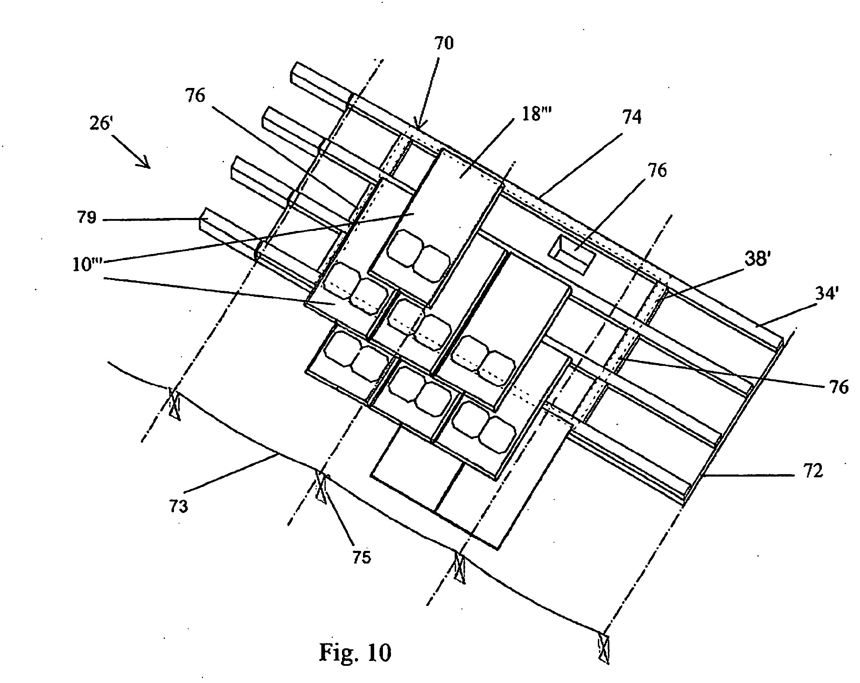

Referring to Fig. 10, there is illustrated a section 70 of a roof 26' comprising a plurality of slates 10"', arranged in a conventional overlapping manner. It will be appreciated that the slates 10" could also be arranged in the same manner or indeed slates 10"' could be interspersed with slates 10". In any case, prior to fitting the slates, a layer of insulation. 72, preferably phenolic foil faced insulation, is placed over an underlay 73, which covers rafters 75 in a conventional manner. The insulation 72 extends across an area of the roof corresponding to the layout of the slates 10" or 10"'.

A plurality of spaced apart battens 34' are provided and run parallel to a ridge (not shown) of the roof 26' across the surface of the insulation and a plurality of counter battens 38' are provided between the battens 34' running perpendicular to the ridge of the roof 26' and run along opposite edges of the insulation 72. In this embodiment, the battens 34' and counter battens 38' are composed of an ecoplastic material.

A sealing (not shown) is provided on the batten 34' forming an upper barrier 74 of the section 70 and runs parallel to the ridge (not shown) of the roof 26'. The sealing is arranged to underlay a top portion 18"' and abut a side of the top portion 18"', of a plurality of uppermost slates 10"' such that leakage of air circulating beneath the slates 10'", of the section through the upper barrier 74 is mitigated or prevented and air is directed towards a duct 76 for collection. In the preferred embodiment, the sealing is composed of tape, for example acrylic log home tape.

A sealing (not shown) is also provided on the counter battens 38' forming side barriers 76 of the section 70 and is arranged to underlay a least a section of the slate 10"', to thereby mitigate or prevent leakage of air circulating beneath the slates through the side barriers. Again, in the preferred embodiment, the sealing is composed of tape, for example acrylic log home tape.

Once the sealing is applied, the slates 10", 10"' are then secured to the battens 34' in a conventional overlapping manner.

It will be appreciated that the slates 10", 10"' of Fig. 10 may be surrounded by slates of any compatible type and that the combined thickness of the battens 34' and insulation 72 should preferably be equal to the thickness of the battens 79 to which the surrounding slates arc fixed.

## Claims

1. A roof section (70) comprising a plurality of overlapping roof slates (10, 10', 10", 10"'), arranged to be laid on a roof structure (26, 26'), at least some of said roof slates comprising a major surface (12, 12', 12", 12"') and a reverse surface (14, 14', 14", 14"');
at least some of said roof slates further comprise a spacer (16, 60) provided on at least a portion of said reverse surface which overlays another slate, such that said spacer provides a spacing so that air is capable of circulating from underneath a lower edge of respective slates through said spacing towards an upper portion of the roof section;
**characterised in that**
said spacer comprises a wire mesh; and
the roof section has an upper edge (74) and opposite side edges arranged to be substantially sealed with the roof structure underlying said slates, such that said air can be directed toward at least one inlet provided in said roof structure.

2. A roof section (70) comprising a plurality of overlapping roof slates (10, 10', 10". 10"'), arranged to be laid on a roof structure (26, 26'), at least some of said roof slates comprising a major surface (12. 12', 12", 12"') and a reverse surface (14, 14', 14", 14'"): and
at least some of said roof slates further comprise a spacer (16, 60) provided on at least a portion of said reverse surface which overlays another slate;
said spacer comprises a skirt (60) provided around a periphery of the reverse surface of the slate;
**characterised in that** said skirt cooperates with a substantially abutting skirt of an adjacent slate and a reverse surface (14", 14"') of a slate overlaying the adjacent slates, to provide therebetween, a substantially triangular spacing (62) such that air is capable of circulating from underneath a lower edge of respective slates through said substantially triangular spacing towards an upper portion of the roof section; and
the roof section has an upper edge (74) and opposite side edges arranged to be substantially sealed with the roof structure underlying said slates, such that said air can be directed toward at least one inlet provided in said roof structure.

3. The roof section of claim 1, wherein the mesh (16) comprises an expanded raised mesh.

4. The roof section of any preceding claim, wherein at least some of said slates (10, 10', 10", 10"') are composed of aluminium slate.

5. The roof section of any preceding claim, wherein at least some of said slates (10, 10', 10", 10"') include a photovoltaic element disposed on a portion of said major surface not covered by another slate in use and means for interconnecting said element with an element of another slate.

6. The roof section of claims 1 to 4, wherein at least some of said slates (10, 10', 10"_{.} 10"') are composed of a transparent substrate having a photovoltaic element disposed on an underside of the substrate and a backing sheet disposed on an underside of the element.

7. The roof section of claim 5, wherein said backing layer is darkly coloured.

8. The roof section of claims 5 to 7, wherein the photovoltaic element comprises one or more photovoltaic cells or a thin film photovoltaic layer.

9. The roof section of claim 5, wherein the means for interconnecting said cell comprises an electrical connector disposed on said reverse side of said slates and electrically connected to said photovoltaic element.

10. A roof (26, 26') incorporating a roof section according to any preceding claim.

11. The roof (26, 26') of claim 10 further comprising a plurality of spaced apart battens (34, 34') running parallel to a ridge of the roof across a surface of insulation (72) provided thereon and a plurality of counter battens (38, 38') between the spaced apart battens running perpendicular to the ridge of the roof and running along opposite edges of the insulation.

12. The roof (26, 26') of claim 11, wherein the batten (34, 34') comprises a sealing forming an upper barrier (74) of the section (70) and running parallel to the ridge, wherein the sealing is arranged to underlay a top portion (18,18',18",18"') and abut a side of the top portion of a plurality of uppermost slates (10, 10', 10", 10"') such that leakage of air circulating beneath the slates of the section through the upper barrier is mitigated and air is directed towards the inlet for collection.

13. The roof (26, 26') of claim 10 or 11, wherein the counter battens (38, 38') forming side barriers of the section comprise a sealing which is arranged to underlay a least a section of the slate (10, 10', 10", 10"'), to thereby mitigate leakage of air circulating beneath the slates through the side barriers.

## Patentansprüche

1. Dachabschnitt (70), der eine Mehrzahl sich überlagernder Dachschieferplatten (10, 10', 10", 10"') aufweist, die eingerichtet sind, um auf eine Dachstruktur (26, 26') gelegt zu werden, wobei wenigstens einige der Dachschieferplatten eine Hauptoberfläche (12, 12', 12", 12"') und eine Rückfläche (14, 14', 14", 14"') aufweisen; ,
wobei wenigstens einige der Dachschieferplatten weiter ein Distanzstück (16, 60) aufweisen, das wenigstens auf einem Teil der Rückfläche vorgesehen ist, die eine andere Schieferplatte so überlagert, dass das Distanzstück einen Abstand schafft, so dass Luft von unterhalb einer Unterkante von jeweiligen Schieferplatten durch den Abstand in Richtung eines oberen Teils des Dachabschnitts zirkulieren kann;
**dadurch gekennzeichnet, dass**
das Distanzstück ein Drahtgitter aufweist; und
der Dachabschnitt eine Oberkante (74) und gegenüberliegende Seitenkanten aufweist, die angeordnet sind, um im Wesentlichen mit der unter diesen Schieferplatten liegenden Dachstruktur abgedichtet zu werden, so dass Luft in Richtung wenigstens eines in der Dachstruktur vorgesehenen Einlasses geleitet werden kann.

2. Dachabschnitt (70), der eine Mehrzahl sich überlagernder Dachschieferplatten (10, 10', 10", 10"') aufweist, die eingerichtet sind, um auf eine Dachstruktur (26, 26') gelegt zu werden, wobei wenigstens einige der Dachschieferplatten eine Hauptoberfläche (12, 12', 12", 12"') und eine Rückfläche (14, 14', 14", 14"') aufweisen; und
wenigstens einige der Dachschieferplatten weiter ein Distanzstück (16, 60) aufweisen, das wenigstens auf einem Teil der Rückfläche vorgesehen ist, die eine andere Schieferplatte überlagert,
wobei das Distanzstück eine Randleiste (60) aufweist, die um einen Umfang der Rückfläche der Schieferplatte herum vorgesehen ist;
**dadurch gekennzeichnet, dass** die Randleiste mit einer im Wesentlichen anstoßenden Randleiste einer benachbarten Schieferplatte und einer die benachbarten Schieferplatten überlagernden Rückfläche (14", 14"') einer Schieferplatte zusammenwirkt, um zwischen denselben einen im Wesentlichen dreieckigen Abstand (62) zu schaffen, so dass Luft von unterhalb einer Unterkante jeweiliger Schieferplatten durch den im Wesentlichen dreieckigen Raum in Richtung eines oberen Teils des Dachabschnitts zirkulieren kann; und der Dachabschnitt eine Oberkante (74) und gegenüberliegende Seitenkanten aufweist, die angeordnet sind, um im Wesentlichen mit der unter diesen Schieferplatten liegenden Dachstruktur abgedichtet zu werden, so dass Luft in Richtung wenigstens eines in der Dachstruktur vorgesehenen Einlasses geleitet werden kann.

3. Dachabschnitt nach Anspruch 1, bei dem das Gitter (16) ein expandiertes erhöhtes Gitter umfasst.

4. Dachabschnitt nach einem vorhergehenden Anspruch, bei dem wenigstens einige der Schieferplatten (10, 10', 10", 10"') aus Aluminium-Schiefer bestehen.

5. Dachabschnitt nach einem vorhergehenden Anspruch, bei dem wenigstens einige der Schieferplatten (10, 10', 10", 10"') ein Photovoltaikelement, das auf einem in Gebrauch nicht durch eine andere Schieferplatte bedeckten Teil der Hauptoberfläche angeordnet ist, und Mittel zum Verbinden des Elements mit einem Element einer anderen Schieferplatte enthalten.

6. Dachabschnitt nach den Ansprüchen 1 bis 4, bei dem wenigstens einige der Schieferplatten (10, 10', 10", 10"') aus einem durchsichtigen Träger mit einem auf einer Unterseite des Trägers angeordneten Photovoltaikelement und einer auf einer Unterseite des Elements angeordneten Abdeckfolie bestehen.

7. Dachabschnitt nach Anspruch 6, bei dem die Abdeckschicht dunkel gefärbt ist.

8. Dachabschnitt nach den Ansprüchen 5 bis 7, bei dem das Photovoltaikelement eine oder mehrere Photovoltaikzellen oder eine Dünnfilm-Photovoltaikschicht aufweist.

9. Dachabschnitt nach Anspruch 5, bei dem das Mittel zum Verbinden der Zelle einen elektrischen Verbinder aufweist, der auf der Rückseite der Schieferplatten angeordnet und elektrisch mit dem Photovoltaikelement verbunden ist.

10. Dach (26, 26'), das einen Dachabschnitt nach einem vorhergehenden Anspruch enthält.

11. Dach (26, 26') nach Anspruch 10, das weiter eine Mehrzahl beabstandeter Dachlatten (34, 34'), die parallel zu einem First des Dachs über eine darauf vorgesehene Oberfläche von Isolierung (72) verlaufen, und eine Mehrzahl von Gegenlatten (38, 38') zwischen den beabstandeten Dachlatten aufweist, die senkrecht zu dem First des Dachs verlaufen und entlang gegenüberliegenden Kanten der Isolierung verlaufen.

12. Dach (26, 26') nach Anspruch 11, bei dem die Latte (34, 34') eine Dichtung aufweist, die eine obere Sperre (74) des Abschnitts (70) bildet und parallel zum First verläuft, wobei die Dichtung angeordnet ist, um unter einem oberen Teil (18, 18', 18", 18"') zu liegen und an eine Seite des oberen Teils einer Mehrzahl oberster Schieferplatten (10, 10', 10", 10"') so anzustoßen, dass Leckage von Luft, die unter den Schieferplatten des Abschnitts durch die obere Sperre zirkuliert, abgeschwächt wird und Luft zur Sammlung in Richtung des Einlasses geleitet wird.

13. Dach (26, 26') nach Anspruch 10 oder 11, bei dem die Seitensperren des Abschnitts bildenden Gegenlatten (38, 38') eine Dichtung aufweisen, die angeordnet ist, um unter wenigstens einem Abschnitt der Schieferplatte (10, 10', 10", 10"') zu liegen, um **dadurch** Leckage von Luft abzuschwächen, die unter den Schieferplatten durch die Seitensperren zirkuliert.

## Revendications

1. Section de toiture (70) comprenant une pluralité d'ardoises de toit à recouvrement (10, 10', 10", 10"'), disposées pour être posées sur une structure de toit (26, 26'), au moins certaines desdites ardoises de toit comprenant une surface principale (12, 12', 12", 12"') et une surface envers (14, 14', 14", 14'");
au moins certaines desdites ardoises de toit comprenant en outre un espaceur (16, 60) prévu sur au moins une partie de ladite surface envers qui recouvre une autre ardoise, de manière à ce que ledit espaceur assure un espace pour que l'air puisse circuler depuis le dessous d'un bord inférieur d'ardoises respectives à travers ledit espace et vers une partie supérieure de la section de toiture ;
**caractérisée en ce que** :
ledit espaceur comprend une grille métallique ; et
la section de toiture a un bord supérieur (74) et des bords latéraux opposés disposés pour assurer sensiblement une étanchéité avec la section de toit située au-dessous desdites ardoises, de manière à ce que ledit air puisse être dirigé vers au moins une admission prévue dans ladite structure du toit.

2. Section de toiture (70) comprenant une pluralité d'ardoises de toit à recouvrement (10, 10', 10", 10"'), disposées pour être posées sur une structure de toit (26, 26'), au moins certaines desdites ardoises de toit comprenant une surface principale (12, 12', 12", 12"') et une surface envers (14, 14', 14", 14"') ; et
au moins certaines desdites ardoises de toit comprenant en outre un espaceur (16, 60) prévu sur au moins une partie de ladite surface envers qui recouvre une autre ardoise ;
ledit espaceur comprenant une jupe (60) prévue autour d'une périphérie de la surface envers de l'ardoise ;
**caractérisée en ce que** ladite jupe coopère avec une jupe sensiblement contigüe d'une ardoise adjacente et une surface envers (14", 14"') d'une ardoise recouvrant les ardoises adjacentes, pour assurer, entre celles-ci, un espace sensiblement triangulaire (62) tel que l'air soit apte à circuler depuis le dessous d'un bord inférieur d'ardoises respectives à travers ledit espace sensiblement triangulaire vers une partie supérieure de la section de toiture ; et
la section de toiture est munie d'un bord supérieur (74) et de bords latéraux opposés disposés pour assurer sensiblement une étanchéité avec la structure de toit située en-dessous desdites ardoises, de manière à ce que ledit air puisse être dirigé vers au moins une admission prévue dans ladite structure du toit.

3. Section de toiture conforme à la revendication 1, où la grille comprend une grille expansée surélevée.

4. Section de toiture conforme à une quelconque des revendications précédentes, où au moins certaines desdites ardoises (10, 10', 10", 10"') sont composées d'ardoise en aluminium.

5. Section de toiture conforme à une quelconque des revendications précédentes, où au moins certaines desdites ardoises (10, 10', 10", 10"') comprennent un élément photovoltaïque disposé sur une partie de ladite surface principale non couverte par une autre ardoise en cours d'usage et un moyen d'interconnecter ledit élément avec un élément d'une autre ardoise.

6. Section de toiture conforme aux revendications 1 à 4, où au moins certaines desdites ardoises (10, 10', 10", 10"') sont composées d'un substrat transparent doté d'un élément photovoltaïque disposé sur une face de dessous du substrat et d'une feuille de doublure disposée sur une face de dessous de l'élément.

7. Section de toiture conforme à la revendication 6, où ladite couche de doublure est de couleur foncée.

8. Section de toiture conforme aux revendications 5 à 7, où l'élément photovoltaïque comprend une ou plusieurs cellules photovoltaïques ou une couche photovoltaïque en film mince.

9. Section de toiture conforme à la revendication 5, où le moyen d'interconnecter ladite cellule comprend un connecteur électrique disposé sur ledit côté envers desdites ardoises et connecté électriquement audit élément photovoltaïque.

10. Toiture (26, 26') comprenant une section de toiture conforme à une quelconque des revendications précédentes.

11. Toiture (26, 26') conforme à la revendication 10, comprenant en outre une pluralité de liteaux espacés (34, 34') allant parallèlement à un faîte du toit à travers une surface d'isolation (72) prévue dessus et une pluralité de contre-liteaux (38, 38') entre les liteaux espacés allant perpendiculairement à un faîte du toit et allant le long de bords opposés de l'isolation.

12. Toiture (26, 26') conforme à la revendication 11, où le liteau (34, 34') comprend un étanchage formant une barrière supérieure (74) de la section (70) et allant parallèlement au faîte, où l'étanchage est disposé pour être en-dessous d'une partie supérieure (18, 18', 18", 18"') et abouter à un côté de la partie supérieure d'une pluralité d'ardoises les plus élevées (10, 10', 10", 10"') de manière à ce que la fuite d'air circulant au-dessous des ardoises de la section à travers la barrière supérieure soit réduite et que l'air soit dirigé vers l'admission pour être collecté.

13. Toiture (26, 26') conforme à la revendication 10 ou 11, où les contre-liteaux (38, 38') formant des barrières latérales de la section comprennent un étanchage qui est disposé pour être en-dessous d'au moins une section de l'ardoise (10, 10', 10", 10"'), afin de réduire ainsi la fuite d'air circulant au-dessous des ardoises à travers les barrières latérales.
